# EUROPÄISCHE PATENTANMELDUNG

(11) **EP 1 236 612 A2**
(43) Veröffentlichungstag der Anmeldung: **04.09.2002**
(21) Anmeldenummer: 02004636.3
(22) Anmeldetag: 28.02.2002
(51) Int. Cl.: B60P 1/48

(54) **Wechselgerät für Wechselbehälter**

(30) Priorität: 03.03.2001 DE 10110388
(71) Anmelder: F. Weyhausen GmbH & Co. KG, Maschinenfabrik, 27783 Wildeshausen (DE)
(72) Erfinder: Gabriel, Artur, 27793 Wildeshausen (DE)
(74) Vertreter: Siekmann, Gunnar, Dipl.-Phys.

(57) **Zusammenfassung**

Ein als Absetzkipper ausgebildetes, auf einem Fahrzeug montiertes Wechselgerät für Wechselbehälter, hat Auslegerarme (1), die jeweils an ihrem fahrzeugseitigen Ende (2) ein Armstück (3) mit einem Lagerauge (4), aufweisen, mittels dem jeder Auslegerarm (1) um am hinteren Fahrzeugende befindliche, quer zur Fahrzeuglängsachse liegende waagerechte Achsen in zueinander parallelen, etwa lotrechten Ebenen zwangsschwenkbar ist. Jedem Auslegerarm ist für seine Zwangsschwenkung mindestens ein am Auslegerarm angreifender und am Fahrzeug abgestützter Arbeitszylinder zugeordnet. Jedes Armstück ist vor eine Stirnseite des fahrzeugseitigen Endes des jeweils zugehörigen Auslegerarms derart gestoßen vorgesetzt, daß die in der lotrechten Schwenkebene liegenden Längsmittellinien (10,11) von Auslegerarm und Armstück um ein vorbestimmtes Maß (A) in Richtung des am Auslegerarm befindlichen Angriffspunktes für einen Arbeitszylinder, und damit in einer Richtung vom Fahrzeug weg gegeneinander verschoben sind.

## Beschreibung

Die Erfindung bezieht sich auf ein als Absetzkipper ausgebildetes, auf einem Fahrzeug montiertes Wechselgerät für Wechselbehälter, mit Auslegerarmen, die jeweils an ihrem fahrzeugseitigen Ende ein Armstück mit einem Lagerelement, insbesondere einem Lagerauge, aufweisen, mittels dem jeder Auslegerarm um am Fahrzeug, vorzugsweise an dessen hinteren Fahrzeugende befindliche, quer zur Fahrzeugslängsachse liegende waagerechte Achsen in zueinander parallelen, etwa lotrechten Ebenen zwangsschwenkbar ist, wobei jedem Auslegerarm für seine Zwangsschwenkung mindestens ein Antriebsmittel, insbesondere ein am Auslegerarm angreifender und am Fahrzeug abgestützter Arbeitszylinder zugeordnet ist.

Es ist ein Wechselgerät der vorbezeichneten Gattung bekannt, bei dem ein das Lager aufweisendes Armstück eine seitlich an den Auslegerarm angesetzte und gegen das Fahrzeug vorstehende Lasche ist. Die Lasche ermöglicht es, den Anlenkpunkt hinter dem Fahrzeugende unter die der Ladefläche entsprechende Ebene zu legen. Daraus ergibt sich zum Beispiel der Vorteil, daß die Auslegerarme, insbesondere ihre freien Enden, an denen Lastaufnahmemittel, wie zum Beispiel Ketten oder Seile anschlagbar sind, bis zum Erreichen einer tiefstmöglichen Schwenkstellung, in der sie nach vorne, also vom Fahrzeugende weg, weisen, eine gegen die Ladefläche des Fahrzeugs gerichtete Bewegung ausführen können. Dies ermöglicht es, mit den Lastaufnahmemitteln einen Behälter, der in einer Transportposition auf dem Fahrzeug aufgenommen ist, zu sichern, indem die gegen die Ladefläche des Fahrzeugs zwangsgeschwenkten Auslegerarme über die Lastaufnahmemittel so auf den Behälter wirken, daß er gegen Verrutschen gesichert ist.

Jede Lasche ist, ebenso wie der damit ausgerüstete Auslegerarm, im Betrieb nicht unerheblichen Kräften und Momenten ausgesetzt, die in der Konstruktion des Absetzkippers eine entsprechende Berücksichtigung finden müssen, beispielsweise durch Materialverstärkung in entsprechenden Bereichen, insbesondere in den Bereichen der Anlenkung am Fahrzeug über die Laschen. Dadurch wird das Gewicht eines auf einem Fahrzeug aufgebauten und somit vom Fahrzeug mitzuführenden Wechselgerätes erhöht und gleichzeitig die vom Fahrzeug mitführbare Nutzlast entsprechend verringert. Auf die Wirtschaftlichkeit des Betriebes eines mit einem derartigen Wechselgerät ausgerüsteten Fahrzeugs hat der vorstehend angegebene Nachteil negative Auswirkungen.

Der Erfindung liegt die Aufgabe zugrunde, bei einem als Absetzkipper ausgebildeten Wechselgerät eine konstruktive Maßnahme zu finden, welche die gleichen Betriebseigenschaften und Sicherheiten wie ein bekanntes Gerät bietet, dabei jedoch der Nachteil einer Gewichtszunahme vermieden oder zumindest vermindert wird.

Diese Aufgabe ist erfindungsgemäß dadurch gelöst, daß jedes Armstück vor eine Stirnseite des fahrzeugseitigen Endes des jeweils zugehörigen Auslegerarms derart gestoßen vorgesetzt ist, daß die in der lotrechten Schwenkebene liegenden Längsmittellinien von Auslegerarm und Armstück um ein vorbestimmtes Maß gegeneinander verschoben sind.

Bei dieser Ausgestaltung mit einem vorgesetzten und verschobenen Armstück liegen die Längsmittellinien von Auslegerarm und Armstück in derselben lotrechten Schwenkebene, fluchten jedoch nicht miteinander, sondern sind in der Ebene höhenmäßig gegeneinander versetzt, d.h., das Armstück weist einen anderen Abstand zum Fahrzeug auf als der Auslegerarm, vor dessen fahrzeugseitige Stirnseite das Armstück gesetzt ist.

Nach einer vorteilhaften Weiterbildung ist das Armstück somit so vor den Auslegerarm gesetzt, daß es, bezogen auf die nach hinten ausladende Schwenkposition, vom Fahrzeug weg verschoben ist.

Bei dieser Ausgestaltung liegt die Anlenkung des Auslegerarms am Fahrzeug hinter und unter der Heckkante der Ladefläche des Fahrzeugs, womit der Angriffspunkt der Belastung bei aufgenommenem Behälter tief gelegt ist. Dies erhöht die Kippsicherheit des Fahrzeugs. Gleichzeitig ist der Anlenkpunkt so nahe wie möglich an das Hinterrad des Fahrzeugs gelegt. Auch dadurch erhöht sich die Kippsicherheit. Jedes Fahrzeug mit einem Wechselgerät weist im Heckbereich anzubringende zusätzliche Seitenabstützungen auf. Solche Seitenabstützungen vermindern die eigentliche Nutzlast nicht unerheblich. Eine Erhöhung der Kippsicherheit durch Tieflegen des Anlenkpunktes und seiner Anordnung so nahe wie möglich am Hinterrad, ermöglicht es, die zusätzlichen Abstützeinrichtung schwächer und folglich leichter auszubilden, was zu geringerem Gesamtgewicht des mitzuführenden Wechselgerätes führt. Verluste an Nutzlast durch das Eigengewicht des Wechselgerätes können dadurch wieder vermindert werden.

Um mit der Anlenkung nach hinten und unter die Heckkante der Ladefläche zu kommen, muß der Anlenkpunkt am Fahrzeug nach hinten verlegt werden, wodurch seine Ausladung nach vorn wiederum kleiner wird. Bei der erfindungsgemäßen Ausgestaltung wird dieser Nachteil dadurch kompensiert, daß das vorgesetzte Armstück praktisch eine Verlängerung des Auslegerarms bewirkt, so daß sein freies Ende die Last des Fahrzeugs, beispielsweise den Wechselbehälter, auf der Ladefläche weiter vorn absetzen kann. Dies führt zu einer günstigeren Schwerpunktslage beim Transport der Behälter. Da der Auslegerarm und damit auch das Armstück bei der Zwangsverschwenkung zwecks Aufnahme eines Wechselbehälters eine Umklappung im Winkelbereich mehr als 90° ausführt, macht auch das versetzte bzw. verschobene Armstück diese Bewegung mit. Wird der Behälter aufgeladen, kommt er deshalb auch durch das verschobene Armstück weiter nach vorn auf der Ladefläche zu liegen, und zwar nicht nur um das Maß der Versetzung bzw. Verschiebung des Armstückes gegenüber dem Auslegerarm, sondern auch gleichzeitig um das Maß der Länge des Armstücks, um welches der Auslegerarm praktisch verlängert ist, weil vor sein Stirnende das jeweilige Armstück gestoßen vorgesetzt ist.

Das gestoßen vorgesetzte Armstück kann zum Beispiel als geteiltes und damit montageleichtes Lager ausgebildet sein, mit dem der Auslegerarm auf einer am Fahrzeug angebrachten Achse gelagert ist. Es ist jedoch auch möglich, jedes Armstück mit dem Lagerauge als Klemme auszubilden und die Achsen, mit denen die Armstücke dann drehfest und klemmend verbunden sind, drehbar am Fahrzeug zu lagern.

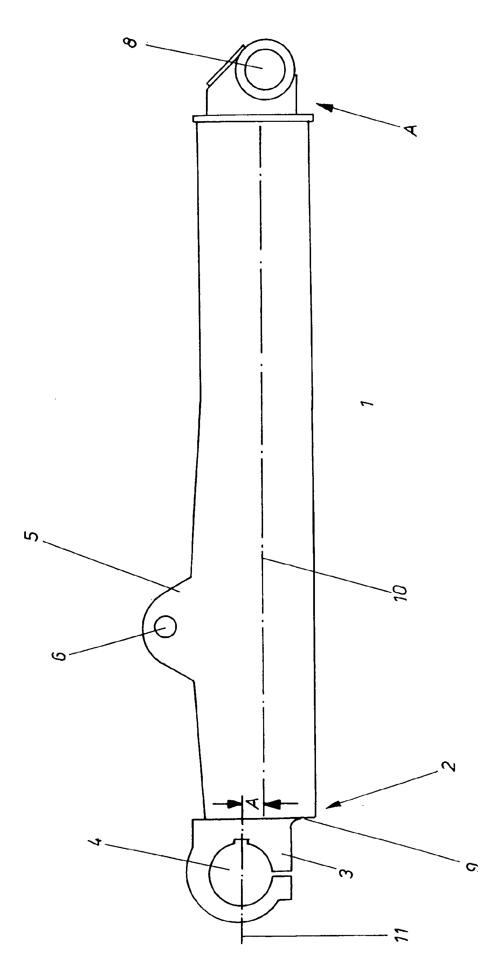

Ein Ausführungsbeispiel der Erfindung, aus dem sich weitere erfinderische Merkmale ergeben, ist in der Zeichnung dargestellt.

Die Zeichnung zeigt einen Auslegerarm 1 in der Seitenansicht. Der Auslegerarm ist Teil eines Wechselgerätes, das auf einem hier nicht weiter dargestellten Fahrzeug montiert ist. Der Auslegerarm weist an seinem fahrzeugseitigen Ende 2 ein Armstück 3 mit einem Lagerauge 4 auf. Mit dem das Lagerauge 4 aufweisenden Armstück ist der Auslegerarm 1 um eine waagerechte Achse in der Zeichnungsebene zwangsschwenkbar. Die waagerechte Achse befindet sich am nicht weiter dargestellten Fahrzeug an dessen Heckseite und liegt quer zur Fahrzeuglängsachse. Jedem Auslegerarm 1 ist für seine Zwangsschwenkung ein Antriebsmittel, zum Beispiel ein nicht weiter dargestellter Arbeitszylinder zugeordnet, der am Fahrzeug abgestützt ist und mit seiner hier nicht weiter sichtbaren Kolbenstange am Vorsprung 5 des Auslegerarms im Punkt Angriffspunkt 6 angreift.

An seinem freien Ende 7 weist der Auslegerarm 1 ein Anschlagmittel 8 auf, an dem einer Handhabung einer Last dienende Lastaufnahmemittel, wie Ketten, Seile oder dergleichen, angeschlagen werden können.

Der Zeichnung ist zu entnehmen, daß das Armstück 3 einer Stirnseite 9 des fahrzeugseitigen Endes 2 des Auslegerarms 1 derart gestoßen vorgesetzt ist, daß die in der lotrechten Schwenkebene (Zeichnungsebene) liegenden Längsmittellinien 10 und 11 von Auslegerarm 1 und Armstück 3 um das vorbestimmte Maß A gegeneinander verschoben sind.

Die Lage des in der Zeichnung dargestellten Auslegerarms entspricht einer Schwenkposition, in welcher der Auslegerarm von der Hinterseite des nicht weiter dargestellten Fahrzeuges weg nach hinten steht. Somit ist der Versatz zwischen Armstück 3 und Auslegerarm 1 gemäß dem Maß A auch vom Fahrzeug weg gerichtet.

Sobald der Auslegerarm 1 mit seinem Lagerauge 4 um eine waagerechte Achse, die quer zur Zeichnungsebene verläuft, mehr als 90° geschwenkt ist, weist sein freies Ende 7 nach links und damit zur Fahrerkabine des nicht weiter dargestellten Fahrzeugs hin. Der Auslegerarm 1 erstreckt sich dabei über die nicht weiter dargestellte Ladefläche des Fahrzeugs zu dessen Vorderseite hin, die hier in Richtung des linken Zeichnungsrandes liegt.

Die Zeichnung zeigt, daß aufgrund des Versatzes das Lagerauge 4 in einer solchen, nach links gerichteten Schwenkposition hinter die Hinterkante eines Fahrzeugs bzw. die Hinterkante der Fahrzeug-Ladefläche greifen kann und somit die Anlenkung des Auslegerarms 1 an einer möglichst tief liegenden waagerechten Achse hinter der Hinterseite des nicht weiter dargestellten Fahrzeugs in vorteilhaft geringem Abstand zu einem Fahrzeug-Hinterrad möglich ist.

## Patentansprüche

1. Als Absetzkipper ausgebildetes, auf einem Fahrzeug montiertes Wechselgerät für Wechselbehälter, mit Auslegerarmen, die jeweils an ihrem fahrzeugseitigen Ende ein Armstück mit einem Lagerelement, insbesondere einem Lagerauge, aufweisen, mittels dem jeder Auslegerarm um am Fahrzeug, vorzugsweise an dessen hinteren Fahrzeugende befindliche, quer zur Fahrzeuglängsachse liegende waagerechte Achsen in zueinander parallelen etwa lotrechten Ebenen zwangsschwenkbar ist, wobei jedem Auslegerarm für seine Zwängsschwenkung mindestens ein Antriebsmittel, insbesondere ein am Auslegerarm angreifender und am Fahrzeug abgestützter Arbeitszylinder zugeordnet ist,
**dadurch gekennzeichnet,**
**daß** jedes Armstück (3) vor eine Stirnseite (9) des fahrzeugseitigen Endes (2) des jeweils zugehörigen Auslegerarms (1) derart gestoßen vorgesetzt ist, daß die in der lotrechten Schwenkebene liegenden Längsmittellinien (10, 11) von Auslegerarm (1) und Armstück (3) um ein vorbestimmtes Maß (A) gegeneinander verschoben sind.

2. Wechselgerät nach Anspruch 1, **dadurch gekennzeichnet, daß** das Armstück (3) mit dem Lagerauge (4) in Richtung des am Auslegerarm (1) befindlichen Angriffspunktes (6) für einen Arbeitszylinder, und damit in einer Richtung vom Fahrzeug weg, verschoben ist.

3. Wechselgerät nach einem der Ansprüche 1 und 2, **dadurch gekennzeichnet, daß** das Armstück (3) als die Montage erleichterndes geteiltes Lager ausgebildet ist.

4. Wechselgerät nach einem der Ansprüche 1 und 2, **dadurch gekennzeichnet, daß** das Armstück (3) als an der waagerechten Achse, um die eine Zwangsverschwenkung des Auslegerarmes (1) erfolgt, festsetzbare Spannklemme ausgebildet ist.
